# EUROPÄISCHE PATENTSCHRIFT

(11) **EP 3 558 603 B1**
(45) Veröffentlichungstag und Bekanntmachung des Hinweises auf die Patenterteilung: **29.03.2023**
(21) Anmeldenummer: 17803822.0
(22) Anmeldetag: 07.11.2017
(51) Int. Cl.: B25J 15/00, B25J 15/02, B25J 15/06, B25J 19/02, B29C 31/08, B29C 70/38

(54) **KONFIGURIERBARER ENDEFFEKTOR ZUM GREIFEN EINES FLÄCHIGEN WERKSTÜCKS**
CONFIGURABLE END EFFECTOR FOR GRIPPING A FLAT WORKPIECE
EFFECTEUR TERMINAL CONFIGURABLE DESTINÉ À SAISIR UNE PIÈCE PLANE

(30) Priorität: 23.12.2016 DE 102016125674
(43) Veröffentlichungstag der Anmeldung: 30.10.2019
(73) Patentinhaber: Broetje-Automation GmbH, 26180 Rastede (DE)
(72) Erfinder: SCHMITZ, Torsten, 26180 Rastede (DE)
(74) Vertreter: Gottschald Patentanwälte Partnerschaft mbB
(86) Internationale Anmeldenummer: PCT/EP2017/078458
(87) Internationale Veröffentlichungsnummer: WO 2018/114114

(56) Entgegenhaltungen:
- EP-A2- 2 952 302
- DE-A1-102011 056 029
- DE-A1-102012 019 958
- DE-U1-202007 013 673

## Beschreibung

Die Erfindung betrifft ein Verfahren zum Betrieb eines Endeffektors gemäß dem Oberbegriff von Anspruch 1, eine Endeffektoranordnung gemäß Anspruch 16 sowie einen Manipulator gemäß Anspruch 17.

Endeffektoranordnungen mit einem Endeffektor und einer Steuerung sind aus dem Stand der Technik allgemein bekannt. Beispielsweise sind Endeffektoren in den Druckschriften DE 10 2012 019 958 A1, DE 10 2011 056 029 A1, DE 20 2007 013 673 U1 und EP 2 952 302 A2 beschrieben.

Endeffektoren sind manipulatorgefiihrte Werkzeuge. Ein Endeffektor ist also ein Werkzeug, das bestimmungsgemäß an einem Manipulator angeordnet, insbesondere dort angeflanscht, ist. Bei dem Manipulator kann es sich um einen Bewegungsapparat jeglicher Art handeln. Regelmäßig handelt es sich bei dem Manipulator um einen Roboter, insbesondere einen Portalroboter und/oder einen Industrieroboter.

Endeffektoren können als Greifwerkzeuge ausgestaltet sein und dann insbesondere Anwendung bei der Durchführung von Handhabungsaufgaben finden, die automatisiert durch den Manipulator geführt ablaufen.

Insbesondere für die Handhabung von flächigen und/oder biegeschlaffen Werkstücken, wie Faserhalbzeugen o. dgl., ergeben sich besondere Anforderungen an den Endeffektor. Die Handhabung solcher Faserhalbzeuge spielt bei der Herstellung von Faserverbundbauteilen eine wichtige Rolle. Faserverbundbauteile werden zunehmend in der Flugzeug- und in der Automobilindustrie eingesetzt, um Strukturbauteile wie Rumpfschalen oder Karosserieteile mit geringem Gewicht und guten mechanischen Eigenschaften bereitzustellen.

In der DE 10 2011 106 214 A1 ist ein Endeffektor beschrieben, mit dem flächige, biegeschlaffe Werkstücke in einer Werkstückaufnahme abgelegt oder an eine Werkstückaufnahme angelegt werden können. Der Endeffektor ermöglicht es, vor dem Ab- bzw. Anlegen des Werkstücks in einem Drapierschritt, dafür zu sorgen, dass die Werkstückoberfläche an die Form der Werkstückaufnahme angepasst wird. Zur Anpassung der Werkstückoberfläche an die Form der Werkstückaufnahme weist der Endeffektor eine Stellanordnung auf, mittels welcher die Greifvorrichtungen relativ zueinander verstellbar sind und so das Werkstück gemäß einer Soll-Werkstückoberfläche verformt werden kann.

Es hat sich nun herausgestellt, dass das Programmieren der Stellanordnung in der Weise, dass der Endeffektor das Werkstück an die Form der Werkstückaufnahme anpassen kann, verhältnismäßig aufwendig ist. Beim Teachen des Endeffektors müssen sämtliche Stellantriebe der Stellanordnung einzeln oder in Gruppen durch manuelle Eingaben auf eine Referenzoberfläche oder eine Soll-Werkstückoberfläche eingestellt werden.

Der Erfindung liegt somit das Problem zugrunde, ein Verfahren zum Betrieb einer Endeffektoranordnung bereitzustellen, welches ein einfaches und schnelles Einrichten und Kalibrieren des Endeffektors an einer Referenzoberfläche, bspw. an der Werkstückaufnahme, ermöglicht.

Dieses Problem wird bei einem Endeffektor gemäß dem Oberbegriff von Anspruch 1 durch die Merkmale des kennzeichnenden Teils von Anspruch 1 gelöst.

Wesentlich ist, dass der Endeffektor eine Tastanordnung mit mehreren Tastern zur Erzeugung von Tastinformationen aufweist. So können in einem Referenziervorgang Tastinformationen erzeugt werden und der Endeffektor kann in dem Referenziervorgang basierend auf den Tastinformationen an eine Referenzoberfläche angepasst werden. Die resultierende Werkzeugkonfiguration wird darauf als Referenz-Werkzeugkonfiguration in einer Steuerung abgespeichert. Hierdurch wird das Programmieren des Manipulators bzw. Endeffektors erheblich vereinfacht. Die Einrichtung und/oder Kalibrierung des Endeffektors an einer Referenzoberfläche und das Abspeichern einer dieser zugeordneten Referenz-Werkzeugkonfiguration kann so einfach und schnell erfolgen.

In der Weiterbildung der Erfindung gemäß Anspruch 2 werden verschiedene vorteilhafte Taster vorgeschlagen. Dabei kann es sich insbesondere um berührende und/oder nicht berührende Taster handeln.

Gemäß Anspruch 3 können die Taster von den Greifvorrichtungen gebildet werden. Durch eine solche Doppelfunktion der Greifvorrichtungen wird eine besonders einfache und kostengünstige Konstruktion des Endeffektors ermöglicht. Bei den Greifvorrichtungen kann es sich insbesondere um pneumatische Greifvorrichtungen handeln (Anspruch 4).

Bevorzugte Arten von Tastinformationen, welche während des Referenziervorgangs erzeugt werden, sind in Anspruch 5 beschrieben. Diese ermöglichen ein besonders einfaches Anpassen des Endeffektors mit seinen Greifvorrichtungen an eine Referenzoberfläche.

Die Weiterbildung gemäß Anspruch 6, wonach die Tastinformationen auf einer Drucküberwachung der Greifvorrichtung basieren, ermöglicht eine ganz besonders einfache Integration der Taster in die Greifvorrichtung.

Vorzugsweise wird der Referenziervorgang vollautomatisch oder teilautomatisch durchgeführt (Anspruch 7). Hierdurch kann eine resultierende Werkzeugkonfiguration auf besonders einfache Art und Weise ermittelt werden.

Die bevorzugten Ausgestaltungen des Verfahrens nach den Ansprüchen 8 bis 10 ermöglichen ein besonders einfaches und sicheres Durchführen des Referenziervorgangs.

Besonders bevorzugt ist die Referenzoberfläche gemäß Anspruch 11 eine Ablagefläche einer Werkstückaufnahme zur Ablage des flächigen Werkstücks. Alternativ kann die Referenzoberfläche jedoch auch eine Ablagefläche eines bereits in der Werkstückaufnahme abgelegten Werkstücks und/oder eine Oberfläche eines Referenzwerkstücks und/oder eine Referenzwerkstückaufnahme sein.

In den Ansprüchen 12 und 13 sind eine Korrekturroutine sowie eine Soll-Korrekturroutine beschrieben, welche die Referenz-Werkzeugkonfiguration korrigiert bzw. eine Soll-Werkzeugkonfiguration bestimmt. Dies ermöglicht eine vereinfachte Anpassung bzw. Transformation der Referenz-Werkzeugkonfiguration.

Auf besonders einfache Art und Weise lassen sich die Referenz-Werkzeugkonfiguration und/oder die Soll-Werkzeugkonfiguration als Parameterdatensatz des Endeffektors abspeichern (Anspruch 14).

Anspruch 15 beschreibt das Verformen eines Werkstücks basierend auf der Referenz-Werkzeugkonfiguration.

Ferner wird die eingangs beschriebene Aufgabe durch eine Endeffektoranordnung gemäß Anspruch 16 gelöst.

Schließlich wird die eingangs beschriebene Aufgabe durch einen Manipulator gemäß Anspruch 17 gelöst.

Es ergeben sich jeweils die gleichen Vorteile, wie vorstehend bereits in Zusammenhang mit dem Verfahren beschrieben. Insbesondere wird ein einfaches und schnelles Kalibrieren bzw. Einrichten des Endeffektors an einer Referenzoberfläche ermöglicht.

Nachfolgend wird die Erfindung anhand einer lediglich ein Ausführungsbeispiel darstellenden Zeichnung näher erläutert. In der Zeichnung zeigt
- Fig. 1: einen Manipulator mit einer vorschlagsgemäßen Endeffektoranordnung nach dem Anpassen an die Referenzoberfläche,
- Fig. 2: den Manipulator aus Fig. 1 bei der Durchführung des vorschlagsgemäßen Verfahrens und
- Fig. 3: eine dreidimensionale Darstellung des vorschlagsgemäßen Endeffektors.

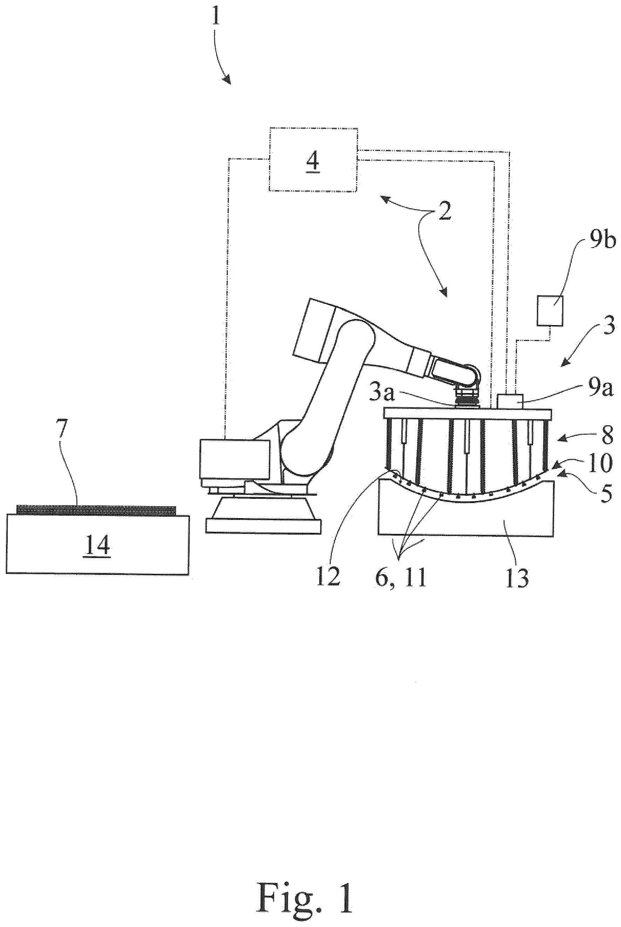

In der Fig. 1 ist ein vorschlagsgemäßer Manipulator 1 gezeigt. Der Manipulator 1 weist eine vorschlagsgemäße Endeffektoranordnung 2 mit einem Endeffektor 3 und einer Steuerung 4 auf. Der Endeffektor 3 ist hier an dem Manipulator 1 über seinen Befestigungsflansch 3a befestigt. Der Manipulator 1 kann insbesondere als Industrieroboter und/oder Portalroboter ausgestaltet sein. Er weist vorzugsweise mindestens drei Achsen, insbesondere vier oder fünf oder, besonders bevorzugt, sechs Achsen auf.

Die Steuerung 4 kann dem Manipulator 1 und/oder dem Endeffektor 3 zugeordnet sein. Sie kann zentral oder dezentral aufgebaut sein. Sie steuert vorzugsweise sowohl den Manipulator 1 als auch den Endeffektor 3.

Der Endeffektor 3 weist eine Werkzeuganordnung 5 mit mehreren Greifvorrichtungen 6 zum Greifen eines flächigen und ggf. biegeschlafen Werkstücks 7 über dessen Werkstückoberfläche auf.

Die flächigen Werkstücke 7 können beispielsweise Aluminiumbleche bzw. Aluminiumfolien und/oder Fasermaterialien sein. Bei den Fasermaterialien kann es sich um Materialien mit trockenen Fasern, insbesondere Fasermatten, handeln, und/oder es können Materialien mit vorimprägnierten Fasern, insbesondere vorimprägnierte Fasermatten, sogenannte Prepregs, sein.

Es können sowohl luftdurchlässige als auch luftdichte Werkstücke mit dem Endeffektor 3 gegriffen und gehalten werden.

Mit dem Endeffektor 3 können Hybridbauteile, wie beispielsweise Glare-Bauteile hergestellt werden. Während der Herstellung der Hybridbauteile werden mehrere flächige Werkstücke 7 mit dem Endeffektor 3 aufeinander gelegt Auch zur Herstellung von Glasfaser- oder CFK-Bauteile können flächige Werkstücke 7 mit dem Endeffektor 3 aufeinander gelegt werden. Mit dem Endeffektor 3 können insbesondere Strukturbauteile, insbesondere Flugzeugstrukturbauteile und/oder Landfahrzeugstrukturbauteile, hergestellt werden. Diese Strukturbauteile weisen in der Regel einen mehrlagigen Schichtaufbau auf. Bei der Herstellung drapiert der Endeffektor 3 flächige Werkstücke 7, ggf. aus unterschiedlichen Materialien und/oder mit unterschiedlichen Faserorientierungen, nacheinander in mehreren Ablageschichten aufeinander. Vorzugsweise werden wechselseitig Werkstücke aus Metall, insbesondere aus Aluminium, und Fasermaterialien, insbesondere Prepregs, aufeinander drapiert.

Vorschlagsgemäß kann der Endeffektor 3 verschiedene Werkzeugkonfigurationen annehmen. Er weist eine Stellanordnung 8 auf, mittels der er die Werkzeugkonfiguration verstellt und damit die Relativlage der Greifvorrichtungen 6 zueinander an eine Soll-Werkstückoberfläche anpassen kann. Die Soll-Werkstückoberfläche ist hier und vorzugsweise eine, insbesondere vorbestimrnte, Oberflächenform des Werkstücks 7, welche es vor und/oder während des Drapierens annehmen soll.

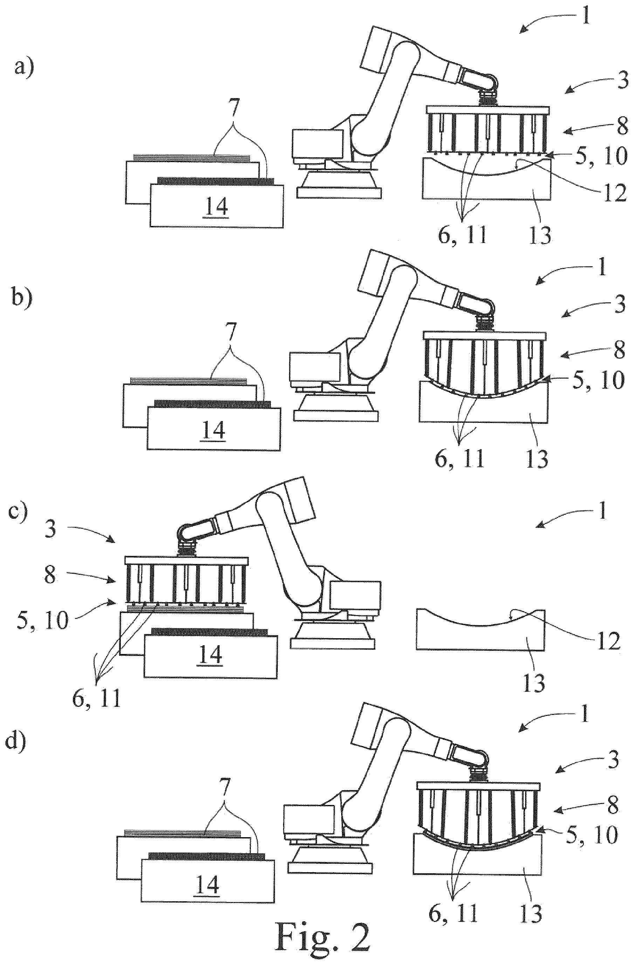

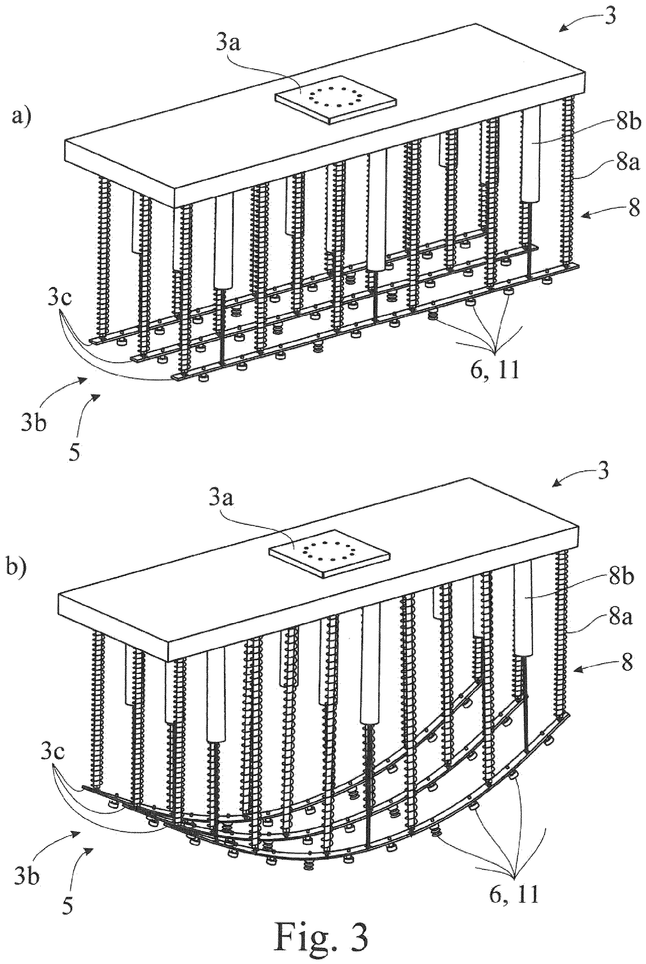

Der Endeffektor 3 kann, wie in Fig. 3 gezeigt, eine Trägeranordnung 3b aufweisen, an der die die Werkzeuganordnung 5 bildenden Greifvorrichtungen 6 angeordnet sind und wobei mittels der Stellanordnung 8 die Greifvorrichtungen 6 zueinander durch eine Verstellung der Trägeranordnung 3b verstellbar sind. Dies ist beispielsweise im Ablauf der Fig. 2 gezeigt. Hierdurch ist es möglich, ein gehaltenes Werkstück 7 umzuformen.

Die Trägeranordnung 3b weist mindestens einen, vorzugsweise mindestens zwei, weiter vorzugsweise mindestens drei, Träger 3c auf. Der oder die Träger 3c ist bzw. sind zumindest zum Teil aus einem verformbaren Material, insbesondere elastisch verformbaren Material, ausgestaltet. Hierbei kann es sich insbesondere um ein Kunststoffmaterial und/oder ein Gummimaterial handeln. Zusätzlich kann vorgesehen sein, dass die Träger 3c der Trägeranordnung 3b untereinander verbunden sind, vorzugsweise sind die Träger 3c jedoch unverbunden, wie dies in der Fig. 3 gezeigt ist.

Die Stellanordnung 8 weist hier und vorzugsweise mindestens einen, insbesondere stufenlos, verstellbaren Stellantrieb 8a, 8b auf. Dieser wirkt hier und vorzugsweise von der dem Werkstück 7 abgewandten Seite des Trägers 3c aus auf den Träger 3c zu dessen Verformung.

Im Ausführungsbeispiel sind mehrere Stellantriebe 8a, 8b über die Oberfläche des Trägers 3c verteilt angeordnet. Dabei kann es sich auch um verschiedene Arten von Stellantrieben 8a, 8b handeln. Diese werden vorzugsweise pneumatisch angetrieben.

Vorzugsweise ist mindestens ein Stellantrieb 8a, 8b als pneumatischer Muskel 8a ausgebildet. Dieser weist vorzugsweise einen schlauchartigen Abschnitt auf. Dieser schlauchartige Abschnitt ist mit einem Druck, insbesondere Luftdruck, beaufschlagbar, welcher eine Längenänderung des schlauchartigen Abschnitts bewirkt und damit zu der Erzeugung einer Antriebsbewegung führt.

Zusätzlich oder alternativ kann ein Stellantrieb 8b auch als pneumatischer Zylinder 18 ausgestaltet sein. Hier und vorzugsweise sind sowohl pneumatische Zylinder 8b als auch pneumatische Muskeln 8a als Stellantriebe 8a, 8b vorgesehen.

Die Greifvorrichtungen 6 sind hier und vorzugsweise pneumatische Greifvorrichtungen 6, insbesondere Vakuumgreifer und/oder Bemoulligreifer. Vorzugsweise sind hier die Greifvorrichtungen 6 wie in den Anmeldungen DE 10 2016 011 618 und DE 102016 011 616 beschrieben ausgebildet. Diesbezüglich darf auf die dortigen Ausführungen verwiesen werden.

Zudem weist die Endeffektoranordnung 2 bzw. der Manipulator 1, insbesondere der Endeffektor 3, vorzugsweise eine schaltbare Ventilvorrichtung 9a zum Anschluss der Greifvorrichtungen 6 an eine Versorgungsquelle 9b auf. Vorzugsweise weist die Ventilvorrichtung 9a mehrere Ventile auf.

Es können auch mehrere Versorgungsquellen 9b vorgesehen sein. Bei der Versorgungsquelle 9b bzw. den Versorgungsquellen 9b kann es sich um eine Druckquelle und/oder eine Unterdruckquelle handeln.

Vorzugsweise sind die Greifvorrichtungen 6 einzeln an der Ventilvorrichtung 9a angeschlossen. Sie können jedoch auch in Gruppen an dieser angeschlossen sein, um die Anzahl der benötigten Ventile zu reduzieren. Zum Schalten der Ventilvorrichtung 9a ist hier und vorzugsweise die Steuerung 4 vorgesehen. Diese steuert hier und vorzugsweise auch die Stellanordnung 8.

Zur weiteren Ausgestaltung des Endeffektors wird auf die DE 10 2015 009 177.8 und/oder die DE 10 2011 106 214 A1 verwiesen.

Vorschlagsgemäß weist der Endeffektor 3 zudem eine Tastanordnung 10 mit mehreren Tastern 11 zur Erzeugung von Tastinformationen auf. Während eines Referenziervorgangs können Tastinformationen erzeugt werden und der Endeffektor 3 kann mit seinen Greifvorrichtungen 6 in dem Referenziervorgang basierend auf den Tastinformationen an die Referenzoberfläche 12 angepasst werden. Die hieraus resultierende Werkzeugkonfiguration kann dann als Referenz-Werkzeugkonfiguration in der Steuerung 4 abgespeichert werden.

Hierdurch wird das Programmieren des Manipulators bzw. Endeffektors 3 erheblich vereinfacht. Die Einrichtung und/oder Kalibrierung des Endeffektors 3 an eine Referenzoberfläche 12 und das Abspeichern einer dieser zugeordneten Referenz-Werkzeugkonfiguration kann so einfach und schnell erfolgen.

Die gespeicherte Werkzeugkonfiguration kann beispielsweise die Stellung der Stellanordnung 8, insbesondere die Stellung der Stellantriebe 8a, 8b, und/oder Betriebsparameter des Endeffektors 3, insbesondere der Stellanordnung 8, und/oder die geometrische Anordnung der Greifeinrichtungen 6 umfassen.

Zur Durchführung des Referenziervorgangs können als Taster 11 sowohl berührungslose Taster als auch berührende Taster eingesetzt werden. Berührungslose Taster können insbesondere kapazitive und/oder induktive und/oder optische Taster sein. Als berührende Taster haben sich Drucktaster bewährt.

Eine besonders einfache und kostengünstige Konstruktion ergibt sich jedoch, wenn wie im Ausführungsbeispiel und vorzugsweise die Taster 11 von den Greifvorrichtungen 6 gebildet werden.

Die während des Referenziervorgangs erzeugten Tastinformationen, auf welchen insbesondere das Anpassen des Endeffektors 3 erfolgt, können ein Erreichen der Referenzoberfläche 12 durch einen Taster 11 und/oder ein Erreichen eines vorbestimmten Abstands zu der Referenzoberfläche 12 durch einen Taster 11 und/oder den Abstand der Referenzoberfläche 12 zum Taster 11 umfassen. Hierdurch wird ein Anfahren der Referenzoberfläche 12 und ein Anpassen des Endeffektors 3 an die Referenzoberfläche 12 auf besonders einfache Art ermöglicht.

Im Ausführungsbeispiel und vorzugsweise basieren die Tastinformationen auf einer Drucküberwachung der Greifvorrichtung 6. So können beispielsweise die Tastinformationen auf dem Erkennen einer, insbesondere vordefinierten, Druckänderung an den Greifvorrichtungen 6 basieren. Vorzugsweise erkennt die Steuerung 4 dann ein Tasten, wenn der Betrag der Druckänderung einen Schwellwert überschreitet, und/oder, wenn ein vordefinierter Druckverlauf erfasst wird. Die Drucküberwachung erfolgt, insbesondere durch die Steuerung 4, vorzugsweise an der Greifvorrichtung 6 und/oder an der Ventilvorrichtung 9a. Diese Ausgestaltungen ermöglichen eine Doppelfunktion der Greifvorrichtung 6 sowohl als Greifvorrichtung 6, als auch als Taster 11. Beim Erkennen eines Tastens schaltet die Steuerung 4 dann vorzugsweise den Stellantrieb 8a, 8b bzw. die Stellantriebe 8a, 8b ab, welcher bzw. welche dem das Tasten erkennenden Taster 11 bzw. den das Tasten erkennenden Tastern 11 zugeordnet ist bzw. sind.

Der Referenziervorgang kann vollautomatisch oder teilautomatisch durchgeführt werden. Er soll nachfolgend anhand der Fig. 2 näher beschrieben werden.

Vorzugsweise wird der Endeffektor 3 vor oder während des Referenziervorgangs, insbesondere manuell, in eine Relativposition zur Referenzoberfläche 12 verfahren, in welcher zumindest ein Teil der Referenzoberfläche 12 von zumindest einem Taster 11 erfasst wird, und/oder, in welcher zumindest ein Teil der Referenzoberfläche 12 durch ein Verstellen der Stellanordnung 8 erfassbar ist. Dies ist in der Fig. 2a gezeigt. Wie der Fig. 2 ferner zu entnehmen ist, hält der Endeffektor 3 während des Referenziervorgangs kein Werkstück 7. In alternativen Ausgestaltungen des Verfahrens kann der Referenziervorgang durch den Endeffektor 3 mit einem Werkstück 7 durchgeführt werden.

Zudem nimmt die Werkzeuganordnung 5 vor dem Referenziervorgang oder während des Referenziervorgangs eine Anfangs-Werkzeugkonfiguration ein. Im Ausführungsbeispiel ist dies ein eingefahrener Zustand der Stellanordnung 8, vgl. Fig. 2a. Dies kann jedoch auch eine beliebige andere Werkzeugkonfiguration sein. Vorzugsweise handelt es sich bei der Anfangswerkzeugkonfiguration jedoch um eine Werkzeugkonfiguration, welche ein Anfahren der Referenzoberfläche 12 durch die Werkzeuganordnung 5 ohne eine Verstellung des Manipulators 1 bzw. ein Bewegen des Befestigungsflansches 3a des Endeffektors 3 ermöglicht. Besonders bevorzugt erfolgt das Anfahren durch ein Verstellen der Stellanordnung 8. Die Anfangs-Werkzeugkonfiguration kann insbesondere eingeteacht und/oder über eine Benutzerschnittstelle eingegeben und/oder aus CAD-Daten extrahiert werden.

In dem Referenziervorgang wird der Endeffektor 3 hier und vorzugsweise basierend auf den Tastinformationen, insbesondere aus der Anfangs-Werkzeugkonfiguration heraus und/oder automatisch, an die Referenzoberfläche 12, insbesondere gesteuert durch die Steuerung 4, angepasst. Dies ist in der Fig. 2b zu sehen. Das Anpassen des Endeffektors 3 an die Referenzoberfläche 12 erfolgt hier und vorzugsweise durch eine Anpassung der Relativlage der Taster 11 zueinander und/oder durch eine Anpassung der Relativlage der Taster 11 zu einem Befestigungsflansch 3a des Endeffektors 3. Im Ausführungsbeispiel wird die Werkzeugkonfiguration solange verstellt, bis sich die Greifelemente 6 an die Referenzoberfläche 12 anlegen.

Bei einem teilautomatischen Durchführen des Referenziervorgangs erfolgt hier und vorzugsweise also das Verfahren des Endeffektors 3 in eine Relativposition zur Referenzoberfläche 12 manuell gesteuert und das Anpassen des Endeffektors 3 an die Referenzoberfläche 12 automatisch. Im Falle eines automatischen Durchführens des Referenziervorgangs erfolgt hier und vorzugsweise das Verfahren des Endeffektors 3 in eine Relativposition zur Referenzoberfläche 12 und das Anpassen des Endeffektors 3 an die Referenzoberfläche 12 automatisch.

An dieser Stelle sei darauf hingewiesen, dass der Referenziervorgang einmalig zum Einrichten einer Fertigung erfolgen kann, dass dieser jedoch auch triggerbasiert und/oder zyklisch erneut durchgeführt werden kann, beispielsweise nach jeder zehnten Drapierung eines Werkstücks 7, oder, nachdem vorbestimmte Qualitätskriterien nicht mehr eingehalten wurden.

Die Referenzoberfläche 12 kann, wie im Ausführungsbeispiel, eine Ablagefläche einer Werkstückaufnahme 13 zur Ablage des flächigen Werkstücks sein. Die Referenzoberfläche 12 kann jedoch auch eine Ablagefläche eines bereits in einer Werkstückaufnahme 13 abgelegten Werkstücks 7 und/oder eine Oberfläche eines Referenzwerkstücks sein. Schließlich kann es sich bei der Referenzoberfläche auch um eine Referenzwerkstückaufnahme handeln, welche primär zum Einteachen der Referenz-Werkzeugkonfiguration verwendet wird.

Hier ist es vorzugsweise so, dass der Referenziervorgang als iteratives Verfahren ausgestaltet ist, in welchem eine Anfahrbewegung an die Referenzoberfläche 12 und ein Tastvorgang der Taster 11 wechselweise durchgeführt wird, bis der Endeffektor 3 an die Referenzoberfläche 12 angepasst ist. Dabei wird nach einem Tastvorgang in der jeweils nächsten Anfahrbewegung die Stellanordnung 8 vorzugsweise nur in den Bereichen verstellt, in welchen die Taster 11 die Referenzoberfläche 12 noch nicht ertastet haben.

Ist der Endeffektor 3 mit seinen Greifvorrichtungen 6 an die Referenzoberfläche 12 angepasst worden, wird die resultierende Werkzeugkonfiguration als Referenz-Werkzeugkonfiguration in der Steuerung 4 abgespeichert. Die Referenz-Werkzeugkonfiguration kann in einem flüchtigen und/oder nichtflüchtigen Speicher der Steuerung 4 abgespeichert werden.

Die Referenz-Werkzeugkonfiguration kann ferner mittels einer Korrekturroutine korrigiert und in der Steuerung 4 abgespeichert werden. In der Korrekturroutine kann die Referenz-Werkzeugkonfiguration mittels in der Steuerung 4 abgespeicherten Korrekturfaktoren und/oder Korrekturprofilen korrigiert und abgespeichert werden.

Zusätzlich oder alternativ kann die Referenz-Werkzeugkonfiguration einer Soll-Werkzeugkonfiguration zur Erzeugung der Soll-Werkstückoberfläche entsprechen und/oder es kann basierend auf der Referenz-Werkzeugkonfiguration mittels einer Soll-Korrekturroutine eine Soll-Werkzeugkonfiguration zur Erzeugung der Soll-Werkstückoberfläche bestimmt werden. Die Soll-Korrekturroutine ist dabei vorzugsweise abhängig vom Material des Werkstücks 7 und/oder der Materialstärke des Werkstücks 7 und/oder der Ablageschicht des Werkstücks 7 in der Werkstückaufnahme 13. Hierdurch ist eine Anpassung an das zu drapierende Werkstück 7, insbesondere dessen Material, und/oder an die Lage des Werkstücks 7 in der Werkstückaufnahme 13 möglich. So können beispielsweise Werkstücke 7, welche in einer höheren Schicht eines zu fertigenden Strukturbauteils liegen, vor dem Drapieren stärker oder weniger stark vom Endeffektor 3 verformt werden, als solche, die bereits in einer niedrigeren Schicht in der Werkstückaufnahme 13 drapiert wurden.

Die Referenz-Werkzeugkonfiguration und/oder die Soll-Werkzeugkonfiguration können als Parameterdatensatz des Endeffektors und/oder als CAD-Datensatz gespeichert werden. Vorzugsweise werden Stellungen der Stellanordnung 8 als Parameterdatensatz abgespeichert.

Nachdem eine Referenz-Werkzeugkonfiguration mittels des zuvor beschriebenen Verfahrens bestimmt wurde, kann basierend auf der Referenz-Werkzeugkonfiguration ein flächiges Werkstück 7 durch eine Verstellung der Werkzeugkonfiguration an eine Soll-Werkstückoberfläche angepasst werden.

In den Fig. 2c und 2d wird die Fertigung eines Strukturbauteils, insbesondere eines Flugzeugstrukturbauteils oder Landfahrzeugkarosseriestrukturbauteils, gezeigt. Hier stehen der Manipulator 1, eine Werkstückaufnahme 13 und ein Bereitstellungsplatz 14 in einer Fertigungszelle.

Basierend auf der Referenz-Werkzeugkonfiguration, insbesondere der Soll-Werkzeugkonfiguration, kann nach einem Referenziervorgang dann ein zuvor beschriebenes Strukturbauteil gefertigt werden.

Dazu kann mit dem Endeffektor 3, wie in der Fig. 2c gezeigt, ein Werkstück 7 an einem Bereitstellungsplatz 14 aufgenommen und zur Werkstückaufnahme 13 transportiert werden. Das flächige Werkstück 7 wird, vorzugsweise während des Transports, basierend auf der Referenz-Werkzeugkonfiguration, insbesondere der Soll-Werkzeugkonfiguration, durch eine Verstellung der Werkzeugkonfiguration gemäß einer Soll-Werkstückoberfläche verformt. Dann kann das Werkstück 7 in der Werkstückaufnahme 13, welche hier und vorzugsweise auch die Referenzoberfläche 12 ausbildet, drapiert werden.

Danach kann das nächste Werkstück 7 von dem oder einem anderen Bereitstellungsplatz 14 aufgenommen, wie zuvor beschrieben verformt, und drapiert werden. Auf diese Art und Weise kann ein Strukturbauteil schichtweise aufgebaut werden.

Zu den Details der Herstellung der Strukturbauteile wird auf die Anmeldungen DE 10 2015 009 177.8, DE 10 2016 011 618.8 und DE 10 2016 011 616.1 verwiesen.

## Patentansprüche

1. Verfahren zum Betrieb einer Endeffektoranordnung (2) mit einem Endeffektor (3) und einer Steuerung (4), wobei der Endeffektor (3) eine Werkzeuganordnung (5) mit mehreren Greifvorrichtungen (6) zum Greifen eines flächigen Werkstücks (7) über dessen Werkstückoberfläche (7a) aufweist, wobei der Endeffektor verschiedene Werkzeugkonfigurationen annehmen kann, und wobei eine Stellanordnung (8) vorgesehen ist, mittels der die Werkzeugkonfiguration verstellbar und damit die Relativlage der Greifvorrichtungen (6) zueinander an eine Soll-Werkstückoberfläche anpassbar ist,
wobei der Endeffektor (3) eine Tastanordnung (10) mit mehreren Tastern (11) zur Erzeugung von Tastinformationen aufweist,
**dadurch gekennzeichnet,**
**dass** die Tastinformationen in einem Referenziervorgang erzeugt werden, dass der Endeffektor (3) mit seinen Greifvorrichtungen (6) in dem Referenziervorgang basierend auf den Tastinformationen an eine Referenzoberfläche (12) angepasst wird, und dass die resultierende Werkzeugkonfiguration als Referenz-Werkzeugkonfiguration in der Steuerung (4) abgespeichert wird.

2. Verfahren nach Anspruch 1, **dadurch gekennzeichnet, dass** die Taster (11) berührungslose Taster, vorzugsweise kapazitive und/oder induktive und/oder optische Taster, sind und/oder, berührende Taster, vorzugsweise Drucktaster, sind.

3. Verfahren nach Anspruch 1 oder 2, **dadurch gekennzeichnet, dass** die Taster (11) von den Greifvorrichtungen (6) gebildet werden.

4. Verfahren nach einem der vorhergehenden Ansprüche, **dadurch gekennzeichnet, dass** die Greifvorrichtungen (6) pneumatische Greifvorrichtungen, insbesondere Vakuumgreifer und/oder Bemoulligreifer, sind.

5. Verfahren nach einem der vorhergehenden Ansprüche, **dadurch gekennzeichnet, dass** die Tastinformationen ein Erreichen der Referenzoberfläche (12) durch einen Taster (11) umfassen, und/oder,
dass die Tastinformationen ein Erreichen eines vorbestimmten Abstands zu der Referenzoberfläche (12) durch einen Taster (11) umfassen, und/oder,
dass die Tastinformationen einen Abstand der Referenzoberfläche (12) zum Taster (11) umfassen.

6. Verfahren nach einem der vorhergehenden Ansprüche, **dadurch gekennzeichnet, dass** die Tastinformationen auf einer Drucküberwachung der Greifvorrichtungen (6) basieren, vorzugsweise, dass die Tastinformationen auf dem Erkennen einer, insbesondere vordefinierten, Druckänderung an den Greifvorrichtungen (6) basieren.

7. Verfahren nach einem der vorhergehenden Ansprüche, **dadurch gekennzeichnet, dass** der Referenziervorgang vollautomatisch oder teilautomatisch durchgeführt wird.

8. Verfahren nach einem der vorhergehenden Ansprüche, **dadurch gekennzeichnet, dass** vor dem Referenziervorgang oder während des Referenziervorgangs der Endeffektor (3), insbesondere manuell, in eine Relativposition zur Referenzoberfläche (12) verfahren wird, in welcher zumindest ein Teil der Referenzoberfläche von zumindest einem Taster (11) erfasst wird und/oder durch ein Verstellen der Stellanordnung (8) erfassbar ist.

9. Verfahren nach einem der vorhergehenden Ansprüche, **dadurch gekennzeichnet, dass** die Werkzeuganordnung (5) vor dem Referenziervorgang oder während des Referenziervorgangs eine Anfangs-Werkzeugkonfiguration einnimmt, vorzugsweise, dass die Anfangs-Werkzeugkonfiguration eingeteacht und/oder über eine Benutzerschnittstelle eingegeben und/oder aus CAD-Daten extrahiert wird.

10. Verfahren nach einem der vorhergehenden Ansprüche, **dadurch gekennzeichnet, dass** die Werkzeugkonfiguration des Endeffektors (3) in dem Referenziervorgang basierend auf den Tastinformationen, insbesondere aus der Anfangs-Werkzeugkonfiguration heraus, an die Referenzoberfläche (12), insbesondere gesteuert durch die Steuerung, angepasst wird, vorzugsweise durch eine Anpassung der Relativlage der Taster (11) zueinander und/oder durch eine Anpassung der Relativlage der Taster (11) zu einem Befestigungsflansch (3a) zur Befestigung des Endeffektors (3) an einem Manipulator.

11. Verfahren nach einem der vorhergehenden Ansprüche, **dadurch gekennzeichnet, dass** die Referenzoberfläche (12) eine Ablagefläche einer Werkstückaufnahme (13) zur Ablage des flächigen Werkstücks (7) und/oder eine Ablagefläche eines bereits in eine Werkstückaufnahme (13) abgelegten Werkstücks und/oder eine Oberfläche eines Referenzwerkstücks und/oder eine Referenzwerkstückaufnahme ist.

12. Verfahren nach einem der vorhergehenden Ansprüche, **dadurch gekennzeichnet, dass** die Referenzoberfläche (12) der Werkzeugkonfiguration der Soll-Werkstückoberfläche entspricht, und/oder, dass mittels einer Korrekturroutine die Referenz-Werkzeugkonfiguration korrigiert und in der Steuerung (4) abgespeichert wird.

13. Verfahren nach einem der vorhergehenden Ansprüche, **dadurch gekennzeichnet, dass** die Referenz-Werkzeugkonfiguration einer Soll-Werkzeugkonfiguration zur Erzeugung der Soll-Werkstückoberfläche entspricht und/oder dass basierend auf der Referenz-Werkzeugkonfiguration mittels einer Soll-Korrekturroutine eine Soll-Werkzeugkonfiguration zur Erzeugung der Soll-Werkstückoberfläche bestimmt wird, vorzugsweise, dass die Soll-Korrekturroutine abhängig vom Material des Werkstücks (7) und/oder der Materialstärke des Werkstücks (7) und/oder der Ablageschicht des Werkstücks (7) in der Werkstückaufnahme (13) ist.

14. Verfahren nach einem der vorhergehenden Ansprüche, **dadurch gekennzeichnet, dass** die Referenz-Werkzeugkonfiguration und/oder die Soll-Werkzeugkonfiguration als Parameterdatensatz des Endeffektors (3) und/oder als CAD-Datensatz gespeichert wird.

15. Verfahren nach einem der vorhergehenden Ansprüche, **dadurch gekennzeichnet, dass** basierend auf der Referenz-Werkzeugkonfiguration, insbesondere der Soll-Werkzeugkonfiguration, nach einem Referenziervorgang ein flächiges Werkstück (7) durch eine Verstellung der Werkzeugkonfiguration gemäß einer Soll-Werkstückoberfläche verformt wird.

16. Endeffektoranordnung mit einem Endeffektor (3) und einer Steuerung (4) , **dadurch gekennzeichnet, dass** die Endeffektoranordnung dazu eingerichtet ist, ein Verfahren nach einem der vorhergehenden Ansprüche durchzuführen.

17. Manipulator mit einer Endeffektoranordnung gemäß Anspruch 16.

## Claims

1. Method for operating an end-effector arrangement (2) having an end effector (3) and having a controller (4), wherein the end effector (3) has a tool arrangement (5) with multiple gripping devices (6) for gripping an areal workpiece (7) via the workpiece surface (7a) thereof, wherein the end effector can assume different tool configurations, and wherein provision is made of an actuating arrangement (8) by means of which the tool configuration is adjustable and the relative position of the gripping devices (6) with respect to one another is thus adaptable to a target workpiece surface,
wherein the end effector (3) has a probing arrangement (10) with multiple probes (11) for generating probing information,
**characterized**
**in that** the probing information is generated in a referencing process, in that the end effector (3) is adapted by way of its gripping devices (6) to a reference surface (12) in the referencing process on the basis of the probing information, and in that the resulting tool configuration is stored as a reference tool configuration in the controller (4) .

2. Method according to Claim 1, **characterized in that** the probes (11) are contactless probes, preferably capacitive and/or inductive and/or optical probes, and/or are contact-making probes, preferably pressure probes.

3. Method according to Claim 1 or 2, **characterized in that** the probes (11) are formed by the gripping devices (6).

4. Method according to one of the preceding claims, **characterized in that** the gripping devices (6) are pneumatic gripping devices, in particular vacuum grippers and/or Bernoulli grippers.

5. Method according to one of the preceding claims, **characterized in that** the probing information comprises a reaching of the reference surface (12) by a probe (11), and/or
**in that** the probing information comprises a reaching of a predetermined distance from the reference surface (12) by a probe (11), and/or
**in that** the probing information comprises a distance of the reference surface (12) from the probe (11).

6. Method according to one of the preceding claims, **characterized in that** the probing information is based on pressure monitoring of the gripping devices (6), preferably **in that** the probing information is based on the identification of an in particular predefined change in pressure at the gripping devices (6).

7. Method according to one of the preceding claims, **characterized in that** the referencing process is carried out fully automatically or partially automatically.

8. Method according to one of the preceding claims, **characterized in that**, prior to the referencing process or during the referencing process, the end effector (3) is moved, in particular manually, into a relative position with respect to the reference surface (12) in which at least a part of the reference surface is detected by at least one probe (11) and/or is detectable by way of an adjustment of the actuating arrangement (8).

9. Method according to one of the preceding claims, **characterized in that**, prior to the referencing process or during the referencing process, the tool arrangement (5) assumes an initial tool configuration, preferably **in that** the initial tool configuration is taught in and/or input via a user interface and/or extracted from CAD data.

10. Method according to one of the preceding claims, **characterized in that** the tool configuration of the end effector (3) is adapted, in particular from the initial tool configuration, to the reference surface (12), in particular controlled by the controller, in the referencing process on the basis of the probing information, preferably by adaptation of the relative position of the probes (11) with respect to one another and/or by adaptation of the relative position of the probes (11) with respect to a fastening flange (3a) for fastening of the end effector (3) to a manipulator.

11. Method according to one of the preceding claims, **characterized in that** the reference surface (12) is a set-down surface of a workpiece receptacle (13) for setting-down of the areal workpiece (7) and/or is a set-down surface of a workpiece that has already been set down in a workpiece receptacle (13) and/or is a surface of a reference workpiece and/or is a reference workpiece receptacle.

12. Method according to one of the preceding claims, **characterized in that** the reference surface (12) of the tool configuration corresponds to the target workpiece surface, and/or **in that** the reference tool configuration is corrected by means of a correction routine and stored in the controller (4).

13. Method according to one of the preceding claims, **characterized in that** the reference tool configuration corresponds to a target tool configuration for producing the target workpiece surface, and/or **in that** a target tool configuration for producing the target workpiece surface is determined by means of a target correction routine on the basis of the reference tool configuration, preferably **in that** the target correction routine is dependent on the material of the workpiece (7) and/or on the material thickness of the workpiece (7) and/or on the set-down layer of the workpiece (7) in the workpiece receptacle (13) .

14. Method according to one of the preceding claims, **characterized in that** the reference tool configuration and/or the target tool configuration are/is stored as a parameter data set of the end effector (3) and/or as a CAD data set.

15. Method according to one of the preceding claims, **characterized in that**, after a referencing process, an areal workpiece (7) is deformed on the basis of the reference tool configuration, in particular on the target tool configuration, by way of an adjustment of the tool configuration according to a target workpiece surface.

16. End-effector arrangement having an end effector (3) and having a controller (4), **characterized in that** the end-effector arrangement is configured to carry out a method according to one of the preceding claims.

17. Manipulator having an end-effector arrangement according to Claim 16.

## Revendications

1. Procédé d'exploitation d'un agencement d'effecteur terminal (2) avec un effecteur terminal (3) et une commande (4), l'effecteur terminal (3) présentant un agencement d'outil (5) avec plusieurs dispositifs de préhension (6) pour la préhension d'une pièce plate (7) par l'intermédiaire de sa surface de pièce (7a), l'effecteur terminal pouvant adopter différentes configurations d'outil, et un agencement de réglage (8) étant prévu, au moyen duquel la configuration d'outil peut être réglée et ainsi la position relative des dispositifs de préhension (6) les uns par rapport aux autres peut être adaptée à une surface de pièce de consigne,
l'effecteur terminal (3) présentant un agencement de palpage (10) avec plusieurs palpeurs (11) pour la production d'informations de palpage,
**caractérisé en ce que**
les informations de palpage sont produites dans une opération de référencement, **en ce que** l'effecteur terminal (3) est adapté à une surface de référence (12) avec ses dispositifs de préhension (6) dans l'opération de référencement sur la base des informations de palpage, et **en ce que** la configuration d'outil résultante est mémorisée dans la commande (4) en tant que configuration d'outil de référence.

2. Procédé selon la revendication 1, **caractérisé en ce que** les palpeurs (11) sont des palpeurs sans contact, de préférence des palpeurs capacitifs et/ou inductifs et/ou optiques, et/ou des palpeurs avec contact, de préférence des palpeurs à pression.

3. Procédé selon la revendication 1 ou 2, **caractérisé en ce que** les palpeurs (11) sont formés par les dispositifs de préhension (6).

4. Procédé selon l'une quelconque des revendications précédentes, **caractérisé en ce que** les dispositifs de préhension (6) sont des dispositifs de préhension pneumatiques, notamment des preneurs par le vide et/ou des preneurs à effet Bernoulli.

5. Procédé selon l'une quelconque des revendications précédentes, **caractérisé en ce que** les informations de palpage comprennent une atteinte de la surface de référence (12) par un palpeur (11), et/ou
**en ce que** les informations de palpage comprennent une atteinte d'une distance prédéterminée par rapport à la surface de référence (12) par un palpeur (11), et/ou
**en ce que** les informations de palpage comprennent une distance de la surface de référence (12) par rapport au palpeur (11).

6. Procédé selon l'une quelconque des revendications précédentes, **caractérisé en ce que** les informations de palpage sont basées sur une surveillance de la pression des dispositifs de préhension (6), de préférence **en ce que** les informations de palpage sont basées sur la détection d'une variation de pression, notamment prédéfinie, sur les dispositifs de préhension (6).

7. Procédé selon l'une quelconque des revendications précédentes, **caractérisé en ce que** l'opération de référencement est réalisée de manière entièrement automatique ou semi-automatique.

8. Procédé selon l'une quelconque des revendications précédentes, **caractérisé en ce qu'**avant l'opération de référencement ou pendant l'opération de référencement, l'effecteur terminal (3) est déplacé, notamment manuellement, dans une position relative par rapport à la surface de référence (12), dans laquelle au moins une partie de la surface de référence est détectée par au moins un palpeur (11) et/ou peut être détectée par un réglage de l'agencement de réglage (8).

9. Procédé selon l'une quelconque des revendications précédentes, **caractérisé en ce que** l'agencement d'outil (5) adopte une configuration d'outil initiale avant l'opération de référencement ou pendant l'opération de référencement, de préférence **en ce que** la configuration d'outil initiale est programmée par apprentissage et/ou saisie par l'intermédiaire d'une interface utilisateur et/ou extraite de données CAO.

10. Procédé selon l'une quelconque des revendications précédentes, **caractérisé en ce que** la configuration d'outil de l'effecteur terminal (3) est adaptée à la surface de référence (12) dans l'opération de référencement sur la base des informations de palpage, notamment à partir de la configuration d'outil initiale, notamment de manière commandée par la commande, de préférence par une adaptation de la position relative des palpeurs (11) les uns par rapport aux autres et/ou par une adaptation de la position relative des palpeurs (11) par rapport à une bride de fixation (3a) pour la fixation de l'effecteur terminal (3) à un manipulateur.

11. Procédé selon l'une quelconque des revendications précédentes, **caractérisé en ce que** la surface de référence (12) est une surface de dépôt d'un réceptacle de pièce (13) pour déposer la pièce plate (7) et/ou une surface de dépôt d'une pièce déjà déposée dans un réceptacle de pièce (13) et/ou une surface d'une pièce de référence et/ou un réceptacle de pièce de référence.

12. Procédé selon l'une quelconque des revendications précédentes, **caractérisé en ce que** la surface de référence (12) correspond à la configuration d'outil de la surface de pièce de consigne, et/ou **en ce que** la configuration d'outil de référence est corrigée au moyen d'une routine de correction et mémorisée dans la commande (4) .

13. Procédé selon l'une quelconque des revendications précédentes, **caractérisé en ce que** la configuration d'outil de référence correspond à une configuration d'outil de consigne pour produire la surface de pièce de consigne et/ou **en ce que**, sur la base de la configuration d'outil de référence, une configuration d'outil de consigne est déterminée au moyen d'une routine de correction de consigne pour produire la surface de pièce de consigne, de préférence **en ce que** la routine de correction de consigne dépend du matériau de la pièce (7) et/ou de l'épaisseur de matériau de la pièce (7) et/ou de la couche de dépôt de la pièce (7) dans le réceptacle de pièce (13).

14. Procédé selon l'une quelconque des revendications précédentes, **caractérisé en ce que** la configuration d'outil de référence et/ou la configuration d'outil de consigne est mémorisée en tant que jeu de données de paramètres de l'effecteur terminal (3) et/ou en tant que jeu de données CAO.

15. Procédé selon l'une quelconque des revendications précédentes, **caractérisé en ce que**, sur la base de la configuration d'outil de référence, notamment de la configuration d'outil de consigne, après une opération de référencement, une pièce plate (7) est déformée par un réglage de la configuration d'outil conformément à une surface de pièce de consigne.

16. Agencement d'effecteur terminal avec un effecteur terminal (3) et une commande (4), **caractérisé en ce que** l'agencement d'effecteur terminal est conçu pour réaliser un procédé selon l'une quelconque des revendications précédentes.

17. Manipulateur avec un agencement d'effecteur terminal selon la revendication 16.
